# EUROPÄISCHE PATENTSCHRIFT

(11) **EP 3 077 779 B1**
(45) Veröffentlichungstag und Bekanntmachung des Hinweises auf die Patenterteilung: **17.06.2020**
(21) Anmeldenummer: 14793094.5
(22) Anmeldetag: 03.11.2014
(51) Int. Cl.: G01F 23/284, H01Q 1/22, H01Q 13/02

(54) **VORRICHTUNG ZUR BESTIMMUNG DES FÜLLSTANDES EINES FÜLLGUTS IN EINEM BEHÄLTER**
DEVICE FOR DETERMINING THE FILLING LEVEL OF A PRODUCT IN A CONTAINER
DISPOSITIF POUR DETERMINER LE NIVEAU D'UN PRODUIT DANS UN RÉCIPIENT

(30) Priorität: 06.12.2013 DE 102013113642
(43) Veröffentlichungstag der Anmeldung: 12.10.2016
(73) Patentinhaber: Endress+Hauser SE+Co. KG, 79689 Maulburg (DE)
(72) Erfinder: BERGMANN, Eric, 79585 Steinen (DE); FEIßT, Klaus, 79252 Stegen (DE)
(74) Vertreter: Andres, Angelika Maria
(86) Internationale Anmeldenummer: PCT/EP2014/073518
(87) Internationale Veröffentlichungsnummer: WO 2015/082146

(56) Entgegenhaltungen:
- EP-A1- 2 584 652
- WO-A1-03/078936
- DE-A1-102006 003 742
- US-B1- 6 276 199
- US-B2- 6 661 389
- J Stabik ET AL: "Methods of preparing polymeric gradient composites Manufacturing and processing", , 1 November 2007 (2007-11-01), XP055595812, Retrieved from the Internet: URL:http://jamme.acmsse.h2.pl/papers_vol25 _1/2514.pdf [retrieved on 2019-06-12]

## Beschreibung

Die Erfindung betrifft eine Vorrichtung, ausgeführt zur Bestimmung oder Überwachung des Füllstands eines in einem Behälter gelagerten Füllguts in einem Prozess mit einer Signalerzeugungseinheit, die hochfrequente Messsignale erzeugt, mit einer Einkoppel-/Auskoppeleinheit, die die hochfrequenten Messsignale auf eine Antenneneinheit einkoppelt bzw. von der Antenneneinheit auskoppelt, wobei die Antenneneinheit einen Hohlleiter und ein sich in Richtung des Füllguts aufweitendes Antennenelement aufweist. Über die Antenneneinheit werden die hochfrequenten Messsignale in Richtung der Oberfläche des Füllguts ausgesendet, und die an der Oberfläche des Füllguts reflektierten Echosignale werden empfangen. Eine Regel-/Auswerteeinheit ermittelt anhand der Laufzeit der Messsignale den Füllstand des Füllguts in dem Behälter. In oder an der Antenneneinheit ist eine Prozesstrennung vorgesehen, die für die hochfrequenten Messsignale zumindest näherungsweise transparent ist und die die Einkoppel-/Auskoppeleinheit vor Einflüssen des Prozesses schützt.

Radar-Messgeräte bestimmen den Füllstand eines Füllguts in einem Behälter über die Laufzeit von Messsignalen. Laufzeitverfahren nutzen die physikalische Gesetzmäßigkeit, dass die Laufstrecke gleich dem Produkt aus Laufzeit und Ausbreitungsgeschwindigkeit der Messsignale ist. Im Falle der Füllstandsmessung entspricht die Laufstrecke dem doppelten Abstand zwischen Antenne und Oberfläche des Füllguts. Handelt es sich bei den Messsignalen um Mikrowellen-Messsignale, so wird jeweils das Nutzechosignal, also der Anteil der Messsignale, der an der Oberfläche des Füllguts reflektiert wird, und dessen Laufzeit anhand der sog. Echofunktion bzw. der digitalen Hüllkurve bestimmt. Die Hüllkurve gibt die Amplituden der Echosignale als Funktion des Abstandes Antenne - Oberfläche des Füllguts wieder. Der Füllstand selbst lässt sich dann aus der Differenz zwischen dem bekannten Abstand der Antenne von dem Boden des Behälters und dem durch die Messung bestimmten Abstand der Oberfläche des Füllguts von der Antenne bestimmen.

Bei Mikrowellen-Messgeräten wird unterschieden zwischen Messgeräten, die nach dem Pulsradar-Verfahren arbeiten und breitbandige Hochfrequenzpulse nutzen, und FMCW-Messgeräten (Frequency Modulated Continous Wave), bei denen kontinuierliche Mikrowellen einer Wellenlänge λ periodisch linear, z. B. mit einer Sägezahnspannung, frequenzmoduliert sind.

Um eine gleichbleibend gute Messperformance zu gewährleisten, sind die die Messsignale abstrahlenden und empfangenden Antennenelemente und die Messelektronik prozessseitig mit Prozesstrennelementen gegen Umgebungs-einflüsse versiegelt. Je nach Einsatzort sind die Füllstandsmessgeräte hohen Temperaturen, hohen Drücken und/oder aggressiven chemischen Medien ausgesetzt. In Abhängigkeit von den am Messort herrschenden Bedingungen sind die Anforderungen, die an den Schutz der empfindlichen Elektronik-komponenten gestellt werden, entsprechend hoch.

Aus der WO 2006/120124 A1 ist ein Füllstandsmessgerät bekannt geworden, bei dem die Hornantenne zumindest teilweise mit einem temperaturstabilen dielektrischen Material gefüllt ist. Das dielektrische Material ist so bemessen, dass bei Normaltemperatur ein definierter Abstand zwischen der Außenfläche des dielektrischen Füllkörpers und der Innenfläche des angrenzenden Antennenelements besteht. Aufgrund der Ausgestaltung kann sich der Füllkörper bei steigenden Temperaturen ausdehnen, so dass keine mechanischen Spannungen innerhalb des Füllkörpers auftreten.

Eine Hornantenne mit einer Prozesstrennung, die in verschiedenen Bereichen aus unterschiedlichen dielektrischen Kunststoffmaterialien gefertigt ist, wird in der internationalen Puublikationsschrift WO 03078936 A1 gezeigt. Die Verwendung verschiedener Kunststoffmaterialien in verschiedenen Teilbereichen dient dort dem Zweck, die Prozesstrennung einerseits chemisch beständig und andereseits vom thermischen Ausdehnungsverhalten her günstig auszulegen.

Bei Radar-Messgeräten, die von der Anmelderin unter der Bezeichnung MICROPILOT vertrieben werden, ist die Prozesstrennung üblicherweise aus PTFE gefertigt. PTFE hat den Vorteil, dass es für die Mikrowellen nahezu transparent ist. Zudem zeigt es eine für eine Vielzahl von Anwendungen in der Prozessautomatisierung ausreichende Temperatur-, Druck- und/oder chemische Beständigkeit. Darüber hinaus hat PTFE den Vorzug, dass es die Ansatzbildung erschwert. Kommt es dennoch zu einer Ansatzbildung an der Prozesstrennung, so ist die Reinigung problemlos möglich.

Wie in der Veröffentlichungsschrift DE 10 2006 0037 42 A1 beschrieben, werden die verwendeten Prozesstrennungen bspw. isostatisch gepresst und nachfolgend durch mechanische Bearbeitung in die endgültige Form gebracht. Die isostatisch gepressten Komponenten zeichnen sich durch eine hohe Homogenität aus, wodurch Sensorausfälle und Messfehler - verursacht durch Inhomogenitäten im Bereich der Prozesstrennung - ausgeschlossen werden können.

Beim isostatisches Pressen wird der physikalische Effekt ausgenutzt, dass sich der Druck in Flüssigkeiten und Gasen allseitig gleichmäßig fortpflanzt und auf den beaufschlagten Flächen Kräfte erzeugt, die zu diesen Flächen direkt proportional sind. Bei der PTFE Verarbeitung wird eine mit Kunststoffpulver oder Kunststoffgranulat, insbesondere mit PTFE-Pulver oder PTFE-Granulat, gefüllte und anschließend flüssigkeitsdicht verschlossene Gummiform in den Druckbehälter einer Pressanlage eingebracht. Der Druck, der über die Flüssigkeit im Druckbehälter allseitig auf die Gummiform wirkt, komprimiert das eingeschlossene PTFE-Pulver gleichmäßig. Nach dem Pressen wird das PTFE-Formteil aus der Gummiform entfernt und in einem Sinterofen gesintert.

Der Nachteil von isostatisch gepressten PTFE-Prozesstrennungen ist darin zu sehen, dass PTFE relativ teuer ist. PP Pulver bzw. PP Granulat ist um ca. einen Faktor 10 billiger als PTFE Granulat bzw. PTFE Pulver.

Der Erfindung liegt die Aufgabe zugrunde, eine kostengünstige Prozesstrennung für ein Füllstandsmessgerät vorzuschlagen.

Die Aufgabe wird dadurch gelöst, dass es sich bei der Prozesstrennung um ein isostatisch gepresstes Formteil handelt, das aus zumindest zwei Kunststoffen mit unterschiedlichen physikalischen und/oder chemischen Eigenschaften gefertigt ist, wobei jeder der zumindest zwei Kunststoffe in jeweils einem definierten Bereich der Prozesstrennung angeordnet ist.

Bevorzugt handelt es sich bei den beiden Kunststoffen um einen ersten Kunststoff mit einer ersten Dielektrizitätskonstante und um einen zweiten Kunststoff mit einer zweiten Dielektrizitätskonstante, wobei die beiden Dielektrizitätskonstanten zumindest näherungsweise gleich sind. Diese Ausgestaltung hat den Vorteil, dass die Mikrowellen die Prozesstrennung zumindest näherungsweise ungestört passieren.

Die Prozesstrennung ist als Einheit ausgestaltet. Die zumindest zwei unterschiedlichen Kunststoffe, die in unterschiedlichen Bereichen der Prozesstrennung zu finden sind, werden in einem isostatischen Pressverfahren miteinander verbunden; die gepresste Einheit wird anschließend gesintert und bearbeitet. Es versteht sich von selbst, dass in einem Übergangsbereich zwischen den beiden unterschiedlichen Kunststoffen Partikel beider Kunststoffe zu finden sind.

Gemäß einer vorteilhaften Ausgestaltung der erfindungsgemäßen Vorrichtung ist die Prozesstrennung gasdicht ausgestaltet. Eine gasdichte Prozesstrennung verhindert, dass Gase aus dem Prozess in den Elektronikbereich des Messgeräts gelangen können.

Weiterhin wird in Verbindung mit der erfindungsgemäßen Lösung vorgeschlagen, dass der erste Kunststoff eine höhere Temperatur- und/oder eine höhere chemische Beständigkeit aufweist als der zweite Kunststoff. Insbesondere ist der erste Kunststoff mit der höheren Temperatur-, Druck- und/oder höheren chemischen Beständigkeit in dem definierten Bereich der Prozesstrennung angeordnet, der dem Prozess zugewandt bzw. prozessberührend ist. In diesem Zusammenhang wird es insbesondere aus Kostengründen als vorteilhaft erachtet, wenn der definierte Bereich, in dem der erste Kunststoff angeordnet ist, im Wesentlichen als Oberflächenschicht ausgebildet ist.

Bevorzugt beträgt die Dicke der Oberflächenschicht aus dem ersten Kunststoff λ/4. Hierbei ist λ die Wellenlänge der hochfrequenten Messsignale (FMCW Verfahren) oder die Mittenwellenlänge eines Pulses aus hochfrequenten Messsignalen (Pulsradar-Verfahren). Diese Ausgestaltung ist vorteilhaft und gleicht Phasensprünge aus, die an der Grenzfläche zwischen zwei Kunststoffen auftreten, wenn diese sich in den Dielektrizitätskonstanten unterscheiden.

Eine vorteilhafte Ausführungsform der erfindungsgemäßen Vorrichtung schlägt vor, dass die Prozesstrennung eine Dichtscheibe aufweist, die aus dem ersten Kunststoff oder einem dritten Kunststoff besteht, der eine vergleichbar hohe Temperatur-, Druck- und/oder und chemische Beständigkeit aufweist wie der erste Kunststoff, wobei der Durchmesser der Dichtscheibe größer ist als der maximale Durchmesser des Antennenelements.

Vorteilhafterweise handelt es sich bei dem ersten Kunststoff oder bei dem dritten Kunststoff um PTFE oder PEEK, während als zweiter Kunststoff das relativ kostengünstige PP verwendet wird. Ebenso kann PFA (Perfluoralkoxy-Copolymer) verwendet werden. Die Kunststoffe Polytetrafluorethylen und Perfluoralkoxy-Copolymer haben gute chemische und physikalische Stoffeigenschaften, die dieses Material für die Anwendung bei einer Prozesstrennung prädestinieren. Zu nennen sind insbesondere die Beständigkeit gegen nahezu alle Chemikalien, die sehr hohe Temperaturfestigkeit, die gute Mikrowellendurchlässigkeit und die gute HF-Performance.

Bevorzugt wird die Kombination von PTFE und PP erachtet, wobei das relativ teure PTFE aufgrund seiner hohen Temperatur- und Druckbeständigkeit und aufgrund seiner hohen chemischen Beständigkeit in dem prozesszugewandten bzw. dem mediumsberührenden Bereich der Prozesstrennung vorgesehen ist, während der prozessabgewandte Bereich der Prozesstrennung aus dem kostengünstigeren PP besteht. Die Kombination beider Kunststoffe hat darüber hinaus den Vorteil, dass im Übergangsbereich zwischen den beiden Kunststoffen keine unerwünschten Reflexionen der Mikrowellen auftreten, da die Dielektrizitätskonstanten der beiden Kunststoffe nahezu gleich sind.

Eine weitere Kombination, die insbesondere vorteilhaft ist, wenn das Messgerät bei höheren Temperaturen eingesetzt wird, besteht aus PEEK und PTFE. PEEK ist über die Temperatur stabiler als PTFE und neigt weniger zum Fließen als PTFE. Daher wird vorgeschlagen, im Randbereich der Prozesstrennung, insbesondere im Bereich der Dichtscheibe PEEK zu verwenden, während die Prozesstrennung außerhalb der Dichtscheibe im Wesentlichen aus PTFE besteht.

Sind die Dielektrizitätszahlen der für die Prozesstrennung verwendeten Kunststoffe verschieden, so tritt in dem Übergangsbereich ein Phasensprung auf. Durch geeignete Hilfsmittel - z.B. ist die Schichtdicke eines der beiden Kunststoffe so bemessen, dass die Verschiebung im Wesentlichen λ/4 oder einem ganzzahligen Vielfachen von λ/4 entspricht, wobei λ die Frequenz der Mikrowellen oder die Mittenfrequenz des Mikrowellen-Pulses ist. Infolge der Beeinflussung der Phasenverschiebung durch ein sog. λ/4 Plättchen interferieren die phasenverschobenen Mikrowellen destruktiv.

Darüber hinaus wird es als vorteilhaft angesehen, wenn in den ersten Kunststoff und/oder in den dritten Kunststoff - also in den Kunststoff, der prozessberührend angeordnet ist - elektrisch leitfähige Partikel eingebracht sind. Hierdurch wird eine elektrische Aufladung der Prozesstrennung vermieden, was insbesondere für den Einsatz in explosionsgefährdeten Bereichen von hoher Wichtigkeit ist.

Eine Optimierung der Hochfrequenzanpassung lässt sich wie folgt erreichen: Der Hochfrequenzübergang vom Freifeld (DK=1) in eine mit dielektrischem Material, insbesondere Kunststoff, gefüllte Antenneneinheit 3, insbesondere in eine Hornantenne bzw. den Hohlleiter 4 einer Hornantenne, erfolgt bei einer hohen Dielektrizitätskonstanten des Füllmaterials über einen λ/4 Transformator, der aus einer oder auch aus mehreren Schichten aufgebaut ist, wobei die Dielektrizitätskonstanten der einzelnen Schichten jeweils zwischen denen des dielektrischen Füllmaterials und der Luft liegen. Die Dicke der einzelnen Schichten beträgt jeweils bevorzugt λ/4 oder ein ganzzahliges Vielfaches von λ/4. Durch isostatisches Pressen mehrerer Schichten aus unterschiedlichen Kunststoffen mit der entsprechenden Dicke lässt sich ein für hochfrequente Messsignale transparente Prozesstrennung 10 besonders einfach und kostengünstig herstellen.

Die Erfindung wird anhand der nachfolgenden Figuren näher erläutert. Es zeigt:
Fig. 1: eine erste Ausführungsform der erfindungsgemäßen Vorrichtung,
Fig. 2: eine zweite Ausführungsform der erfindungsgemäßen Vorrichtung,
Fig. 3: eine dritte Ausführungsform der erfindungsgemäßen Vorrichtung, und
Fig. 4: eine vierte Ausführungsform der erfindungsgemäßen Vorrichtung.

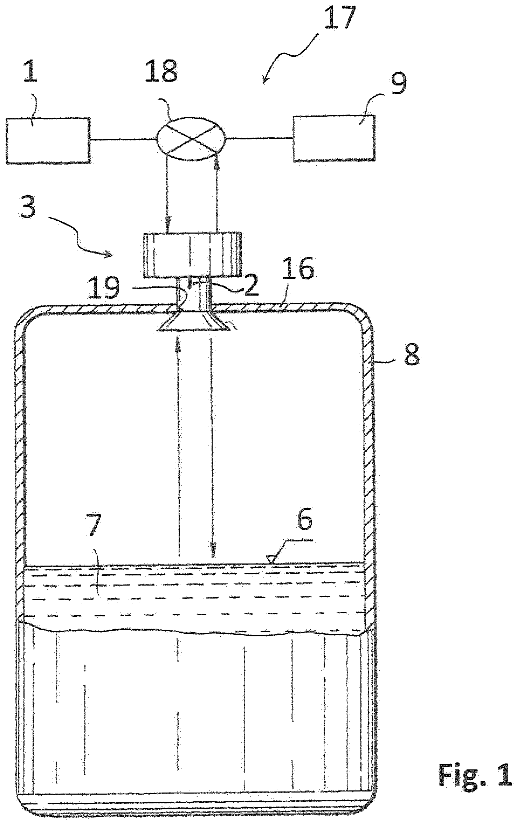

Fig. 1 zeigt eine schematische Darstellung einer Ausgestaltung der erfindungsgemäßen Vorrichtung. Ein Füllgut 7 ist in dem Behälter 8 gelagert. Zur Bestimmung des Füllstandes dient das Füllstandsmessgerät 17, das in einer Öffnung 19 im Deckel 16 des Behälters 8 montiert ist. Über die Antenneneinheit 3 werden die in der Signalerzeugungseinheit 1 erzeugten Messsignale und die über die Einkoppel-/Auskoppeleinheit 2 eingekoppelten Messsignale in Richtung der Oberfläche 6 des Füllguts 7 abgestrahlt. An der Oberfläche 6 werden die gesendeten Signale als Echosignale teilweise reflektiert. Diese Echosignale werden von der Antenneneinheit 3 empfangen, über die Einkoppel-/Auskoppeleinheit 2 ausgekoppelt und in der Regel-/Auswerteeinheit 9 ausgewertet. Der Regel-/Auswerteeinheit 9 ist eine Verzögerungsschaltung zugeordnet, wie sie beispielsweise in der DE 31 07 444 A1 beschrieben ist. Die korrekte Taktung von Absendung der Sendesignale und Empfang der Echosignale erfolgt über die Sende-Empfangsweiche 18. Die Komponenten 1, 9, 18 sind Teil des sog. Messumformers oder Transmitters und üblicherweise in einem in der Fig. 1 nicht gesondert dargestellten Messumformer- bzw. Transmittergehäuse angeordnet.

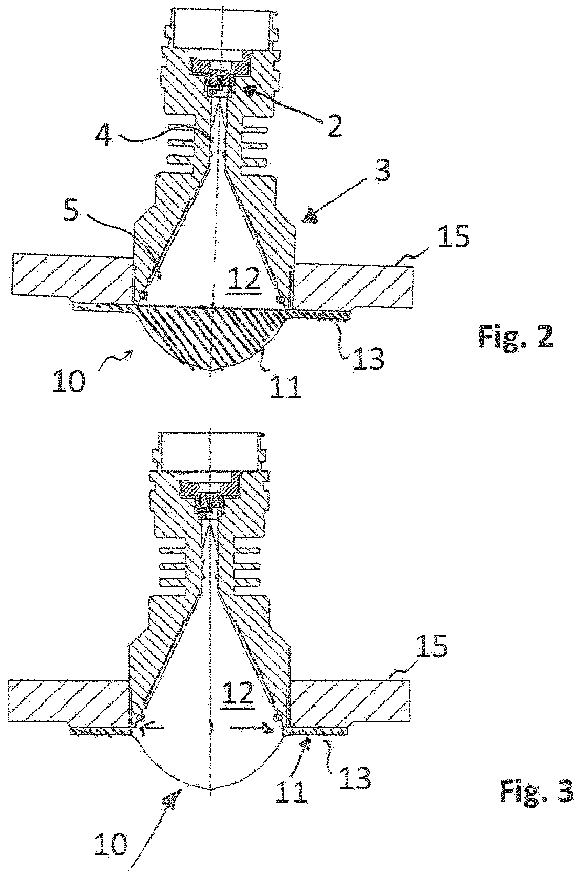

Unterschiedliche Ausgestaltungen der Antenneneinheit 3 mit der erfindungsgemäßen Prozesstrennung 10 sind in den Figuren Fig. 2, Fig. 3 und Fig. 4 zu sehen. Die Prozesstrennung 10 ist bevorzugt so ausgestaltet, dass sie zumindest näherungsweise für die Mikrowellen transparent ist. Dies lässt sich dadurch erreichen, dass für die Prozesstrennung 10 Kunststoffe 11, 12 verwendet werden, deren Dielektrizitätskonstanten DK1, DK2 näherungsweise gleich sind oder deren Dielektrizitätskonstanten DK1, DK2 so geringfügig voneinander abweichen, dass hierdurch verursachte Störungen zu Messfehlern des Füllstandsmessgeräts 17 führen, die innerhalb tolerierbarer Grenzen liegen. Bevorzugt kommen PTFE (Polytetrafluorethylen) und PP (Polypropylen) zum Einsatz.

Unterscheiden sich die Dielektrizitätskonstanten der verwendeten Kunststoffe 11, 12 derart, dass die Störungen zu nicht mehr tolerierbaren Messfehlern führen, so werden auftretende Phasenverschiebungen geeignet, z.B. über λ/4 Plättchen bzw. λ/4 Schichtdicken korrigiert.

Die Prozesstrennung 10 schützt insbesondere die Einkoppel-/Auskoppel-einheit 2 vor schädlichen Einflüssen des Prozesses. Im Prinzip werden durch die Prozesstrennung 10 - in Abstrahlrichtung der hochfrequenten Messsignale gesehen - alle hinter dem mediumsberührenden Bereich der Prozesstrennung 10 liegenden Komponenten des Füllstandsmessgeräts 17 geschützt.

Erfindungsgemäß handelt es sich bei der Prozesstrennung 10 um ein isostatisch gepresstes Formteil, das aus zumindest zwei Kunststoffen 11, 12 mit unterschiedlichen physikalischen und/oder chemischen Eigenschaften gefertigt ist Jeder der zumindest zwei Kunststoffe 11, 12 ist in jeweils einem definierten Bereich der Prozesstrennung 10 vorgesehen. Bevorzugt ist die Prozesstrennung 10 gasdicht ausgestaltet.

In Fig. 2 ist eine Antenneneinheit 3, bestehend aus einem Hohlleiter 4 und einem in Abstrahlrichtung der Mikrowellen aufgeweiteten Antennenelement 5 zu sehen. Das Antennenelement 3 besteht aus einem elektrisch leitfähigen Material, z.B. Edelstahl oder einem leitfähigem Kunststoff. Die als Formteil aus mehreren Kunststoffen zusammengesetzte Prozesstrennung 10 ist über isostatisches Pressen hergestellt.

Um einen reflexionsarmen Übergang der hochfrequenten Messsignale zu gewährleisten, ist die dem Prozess zugewandte Oberfläche der Prozesstrennung 10 konvex ausgestaltet. Durch diese Ausgestaltung lassen sich Phasenunterschiede in der Wellenfront ausgleichen, die in der Antenneneinheit 3 auftreten. Es ist jedoch auch eine plane, kegelförmige oder konkave Übergangsgeometrie zur Ausbildung der gewünschten Abstrahlcharakteristik möglich.

Die hochfrequenten Messsignale werden über eine Einkoppel-/Auskoppel-einheit 2 auf den bzw. aus dem Hohlleiter 4 ein- und ausgekoppelt. Der Hohlleiter 4 kann als Rund- oder Rechteckhohlleiter ausgebildet sein. Bevorzugt wird der Hohlleiter 4 so ausgestaltet, dass sich ein TE-Wellenmode ausbildet. Im Bereich des Hohlleiters 4 hat das Prozesstrennelement 10 die Form einer Kegelspitze oder einer Stufenpyramide. Infolge der getaperten Ausgestaltung lässt sich eine gute Anpassung zwischen den Bereichen des Hohlleiters erreichen, die mit Luft und dielektrischem Material gefüllt sind. Durch diese Anpassung wird vermieden, dass über die Einkoppel-/Auskoppeleinheit 2 eingespeiste Messsignale anteilig zurückreflektiert und gedämpft werden. Es versteht sich von selbst, dass der Hohlleiter 4 auch vollständig mit dem dielektrischen Material der Prozesstrennung 10 ausgefüllt sein kann.

Bei der in Fig. 2 gezeigten Ausführungsform der erfindungsgemäßen, über ein isostatisches Pressverfahren hergestellten Prozesstrennung 10 besteht der prozessberührende bzw. der dem Füllgut 7 zugwandte Bereich der Prozesstrennung 10 inklusive der Dichtscheibe 13 aus PTFE, während der vom Prozess abgewandte Bereich der Prozesstrennung 10 aus PP besteht.

Bei der in Fig. 3 gezeigten Ausführungsform der erfindungsgemäßen Prozesstrennung 10 wird eine Werkstoffkombination aus PEEK und PTFE verwendet. PEEK ist über die Temperatur stabiler und neigt weniger zum Fließen als PTFE. Daher ist der Randbereich der Prozesstrennung 10, insbesondere die Dichtscheibe 13, aus PEEK gefertigt, während die Prozesstrennung 10 ansonsten aus PTFE besteht. Aufgrund der Anordnung der Materialien, 'sehen' die hochfrequenten Messsignale bei der Passage durch die Prozesstrennung 10 nur das PTFE.

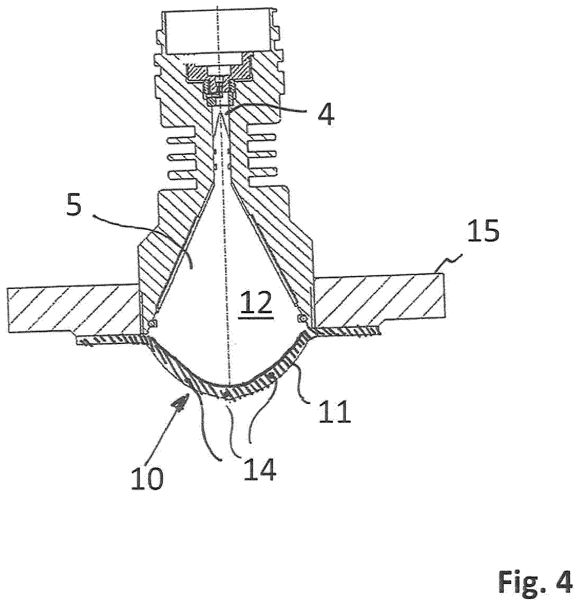

Fig. 4 zeigt einen Längsschnitt durch eine Antenneneinheit 3, bei der die Prozesstrennung 10 aus einer Werkstoffkombination aus PP im prozessabgewandten Bereich und PTFE im dem Prozess zugewandten Bereich. Bevorzugt ist die dem Prozess zugewandte PTFE Oberflächenschicht elektrisch leitfähig ausgestaltet. Hierzu sind in den PTFE Kunststoff z.B. leitfähige Kohlenstoffpartikel 14 eingebracht. Dies ist sinnvoll, da PTFE grundsätzlich elektrostatisch aufladbar ist. Die leitfähigen Partikel 14 werden dem PTFE Kunststoff definiert zugemischt. Das Mischungsverhältnis von leitfähigen Partikeln 14 und erstem Kunststoff 12 ist so bemessen, dass einerseits die nicht aufladbare Oberfläche realisiert ist und dass andererseits die gute Mikrowellendurchlässigkeit des PTFE überhaupt nicht oder nur unwesentlich beeinflusst wird.

### Bezugszeichenliste

- 1: Signalerzeugungseinheit
- 2: Einkoppel-/Auskoppeleinheit
- 3: Antenneneinheit
- 4: Hohlleiter
- 5: Antennenelement
- 6: Oberfläche
- 7: Füllgut
- 8: Behälter
- 9: Regel-/Auswerteeinheit
- 10: Prozesstrennung
- 11: erster Kunststoff
- 12: zweiter Kunststoff
- 13: Dichtscheibe
- 14: leitfähiger Partikel
- 15: Flansch
- 16: Deckel
- 17: Füllstandsmessgerät
- 18: Sende-/Empfangsweiche
- 19: Öffnung

## Patentansprüche

1. Vorrichtung, ausgeführt zur Bestimmung oder Überwachung des Füllstands eines in einem Behälter (8) gelagerten Füllguts (7) in einem Prozess
mit einer Signalerzeugungseinheit (1), die hochfrequente Messsignale erzeugt, mit einer Einkoppel-/Auskoppeleinheit (2), die die hochfrequenten Messsignale auf eine Antenneneinheit (3) einkoppelt bzw. von der Antenneneinheit (3) auskoppelt, wobei die Antenneneinheit (3) einen Hohlleiter (4) und ein sich in Richtung des Füllguts aufweitendes Antennenelement (5) aufweist,
wobei die Antenneneinheit (3) die hochfrequenten Messsignale in Richtung der Oberfläche (6) des Füllguts (7) aussendet und die an der Oberfläche (6) des Füllguts (7) reflektierten Echosignale empfängt, und
mit einer Regel-/Auswerteeinheit (9), die anhand der Laufzeit der Messsignale den Füllstand des Füllguts (7) in dem Behälter (8) ermittelt,
wobei in oder an der Antenneneinheit (3) eine Prozesstrennung (10) vorgesehen ist, die für die hochfrequenten Messsignale zumindest näherungsweise transparent ist und die die Einkoppel-/Auskoppeleinheit (2) vor Einflüssen des Prozesses schützt,
**dadurch gekennzeichnet, dass**
es sich bei der Prozesstrennung (10) um ein isostatisch gepresstes Formteil handelt, das aus zumindest zwei Kunststoffen (11, 12) mit unterschiedlichen physikalischen und/oder chemischen Eigenschaften gefertigt ist, wobei jeder der zumindest zwei Kunststoffe (11, 12) in jeweils einem definierten Bereich der Prozesstrennung (10) angeordnet ist.

2. Vorrichtung nach Anspruch 1,
**dadurch gekennzeichnet, dass**
es sich bei den beiden Kunststoffen (11, 12) um einen ersten Kunststoff (11) mit einer ersten Dielektrizitätskonstante (DK1) und um einen zweiten Kunststoff (12) mit einer zweiten Dielektrizitätskonstante (DK2) handelt, wobei die beiden Dielektrizitätskonstanten (DK1, DK2) zumindest näherungsweise gleich sind.

3. Vorrichtung nach Anspruch 1 oder 2,
**dadurch gekennzeichnet, dass**
die Prozesstrennung (10) gasdicht ausgestaltet ist.

4. Vorrichtung nach einem oder mehreren der Ansprüche 1-3,
**dadurch gekennzeichnet, dass**
der erste Kunststoff (11) eine höhere Temperatur-, Druck- und/oder eine höhere chemische Beständigkeit aufweist als der zweite Kunststoff (12).

5. Vorrichtung nach Anspruch 4,
**dadurch gekennzeichnet, dass**
der erste Kunststoff (11) mit der höheren Temperatur-, Druck- und/oder chemischen Beständigkeit in dem definierten Bereich der Prozesstrennung (10) angeordnet ist, der dem Prozess zugewandt bzw. prozessberührend ist.

6. Vorrichtung nach Anspruch 5,
wobei der definierte Bereich, in dem der erste Kunststoff (11) angeordnet ist, im Wesentlichen als Oberflächenschicht ausgebildet ist.

7. Vorrichtung nach einem oder mehreren der Ansprüche 1-4 oder 6,
**dadurch gekennzeichnet, dass**
die Dicke der Oberflächenschicht aus dem ersten Kunststoff (11) vorzugsweise λ/4 beträgt, wobei λ die Wellenlänge der hochfrequenten Messsignale oder die Mittenwellenlänge eines Pulses aus hochfrequenten Messsignalen ist.

8. Vorrichtung nach zumindest einem der Ansprüche 1-7,
**dadurch gekennzeichnet, dass**
die Prozesstrennung (10) eine Dichtscheibe (13) aufweist, die aus dem ersten Kunststoff (11) oder einem dritten Kunststoff besteht, der eine vergleichbar hohe Temperatur- und chemische Beständigkeit aufweist wie der erste Kunststoff (11), wobei der Durchmesser der Dichtscheibe (13) größer ist als der maximale Durchmesser (D) des Antennenelements (5).

9. Vorrichtung nach einem oder mehreren der vorhergehenden Ansprüche,
**dadurch gekennzeichnet, dass**
es sich bei dem ersten Kunststoff (11) oder bei dem dritten Kunststoff um PTFE oder PEEK handelt und wobei es sich bei dem zweiten Kunststoff (12) um PP handelt.

10. Vorrichtung nach zumindest einem der Ansprüche 6-9,
**dadurch gekennzeichnet, dass**
in den ersten Kunststoff (11) und/oder in den dritten Kunststoff elektrisch leitfähige Partikel (14) eingebracht sind.

## Claims

1. Apparatus, designed to determine or monitor the level of a medium (7) stored in a vessel (8) in a process
with a signal generation unit (1), which generates high-frequency measuring signals, with a coupling/decoupling unit (2), which couples the high-frequency measuring signals into an antenna unit or decouples them from the antenna unit (3), wherein the antenna unit (3) has a waveguide (4) and an antenna element (5) which becomes broader in the direction of the medium,
wherein the antenna unit (3) emits the high-frequency measuring signals in the direction of the surface (6) of the medium (7) and receives the echo signals reflected at the surface (6) of the medium (7), and
with a control/evaluation unit (9) which determines the level of the medium (7) in the vessel (8) on the basis of the transit time of the measuring signals,
wherein a process separation (10) is provided in or on the antenna unit (3), wherein the separation is at least approximately transparent for high-frequency measuring signals and protects the coupling/decoupling unit (2) against process influences,
**characterized in that**
the process separation (10) is a isostatically pressed molded part, which is made from at least two plastics (11, 12) with different physical and/or chemical properties, wherein each of the at least two plastics (11, 12) is each arranged in a defined area of the process separation (10).

2. Apparatus as claimed in Claim 1,
**characterized in that**
the plastics (11, 12) constitute a first plastic (11) with a first dielectric constant (DK1) and a second plastic (12) with a second dielectric constant (DK2), the two dielectric constants (DK1, DK2) being at least approximately equal.

3. Apparatus as claimed in Claim 1 or 2,
**characterized in that**
process separation (10) is designed as gas-tight.

4. Apparatus as claimed in one or more of the Claims 1 to 3,
**characterized in that**
the first plastic (11) has a higher resistance to temperature, pressure and/or chemical media than the second plastic (12).

5. Apparatus as claimed in Claim 4,
**characterized in that**
the first plastic (11) with the higher resistance to temperature, pressure and/or chemical media is arranged in the defined area of the process separation (10) that faces towards the process or which is in contact with the process.

6. Apparatus as claimed in Claim 5,
wherein the defined area in which the first plastic (11) is arranged is essentially designed as a surface layer.

7. Apparatus as claimed in one or more of the Claims 1 to 4 or 6,
**characterized in that**
the thickness of the surface layer made from the first plastic (11) is preferably λ/4, λ being the wavelength of the high-frequency measuring signals or the center wavelength of a pulse of high-frequency measuring signals.

8. Apparatus as claimed in at least one of the Claims 1 to 7,
**characterized in that**
the process separation (10) has a sealing disk (13) which is made from the first plastic (11) or a third plastic, which has a high temperature or chemical resistance comparable to the first plastic (11), wherein the diameter of the sealing disk (13) is greater than the maximum diameter (D) of the antenna element (5).

9. Apparatus as claimed in one or more of the previous Claims,
**characterized in that**
the first plastic (11) or the third plastic is PTFE or PEEK and wherein the second plastic (12) is PP.

10. Apparatus as claimed in at least one of the Claims 6 to 9,
**characterized in that**
electrically conductive particles (14) are incorporated into the first plastic (11) and/or the third plastic.

## Revendications

1. Dispositif, exécuté en vue de la détermination ou de la surveillance du niveau d'un produit (7) stocké dans un réservoir (8) au sein d'un process
avec une unité de génération de signaux (1), qui génère des signaux de mesure haute fréquence, avec une unité de couplage / découplage (2), qui injecte les signaux de mesure haute fréquence à une unité d'antenne ou qui les découple de l'unité d'antenne (3), l'unité d'antenne (3) présentant un guide d'ondes (4) et un élément d'antenne (5) s'élargissant en direction du produit,
l'unité d'antenne (3) émettant les signaux haute fréquence en direction de la surface (6) du produit (7) et recevant les signaux d'écho réfléchis à la surface (6) du produit (7), et
avec une unité de régulation / d'exploitation (9) qui, sur la base du temps de propagation des signaux de mesure, détermine le niveau de remplissage du produit (7) dans le réservoir (8),
une séparation de process (10) étant prévue dans ou sur l'unité d'antenne (3), laquelle séparation est au moins approximativement transparente et protège l'unité de couplage / découplage (2) contre les influences du process, **caractérisé**
**en ce que**, concernant la séparation de process (10), il s'agit d'une pièce formée par pressage isostatique, qui est constituée d'au moins deux plastiques (11, 12) présentant différentes propriétés physiques et/ou chimiques, chacun des deux plastiques (11, 12) étant disposé dans une zone définie de la séparation de process (10).

2. Dispositif selon la revendication 1,
**caractérisé**
**en ce que**, concernant les plastiques (11, 12), il s'agit d'un premier plastique (11) avec une première constante diélectrique (DK1) et d'un deuxième plastique (12) avec une deuxième constante diélectrique (DK2), les deux constantes diélectriques (DK1, DK2) étant au moins approximativement égales.

3. Dispositif selon la revendication 1 ou 2,
**caractérisé**
**en ce que** la séparation de process (10) est conçue de façon étanche au gaz.

4. Dispositif selon l'une ou plusieurs des revendications 1 à 3,
**caractérisé**
**en ce que** le premier plastique (11) présente une résistance à la température, à la pression et/ou aux produits chimiques supérieure à celle du deuxième plastique (12).

5. Dispositif selon la revendication 4,
**caractérisé**
**en ce que** le premier plastique (11) ayant la résistance supérieure à la température, à la pression et/ou aux produits chimiques, est disposé dans la zone définie de la séparation de process (10), qui fait face au process ou qui est en contact avec le process.

6. Dispositif selon la revendication 5,
pour lequel la zone définie, dans laquelle est disposé le premier plastique (11), est conçue pour l'essentiel sous la forme d'une couche superficielle.

7. Dispositif selon l'une ou plusieurs des revendications 1 à 4 ou 6,
**caractérisé**
**en ce que** l'épaisseur de la couche superficielle du premier plastique (11) est de préférence égale à λ/4, λ étant la longueur d'onde des signaux de mesure haute fréquence ou la longueur d'onde moyenne d'une impulsion issue des signaux de mesure haute fréquence.

8. Dispositif selon au moins l'une des revendications 1 à 7,
**caractérisé**
**en ce que** la séparation de process (10) présente un disque d'étanchéité (13) constitué du premier plastique (11) ou d'un troisième plastique, qui présente une résistance à la température et aux produits chimiques comparable à celle du premier plastique (11), le diamètre du disque d'étanchéité (13) étant supérieur au diamètre maximal (D) de l'élément d'antenne (5).

9. Dispositif selon l'une ou plusieurs des revendications précédentes,
**caractérisé**
**en ce que**, concernant le premier plastique (11) ou le troisième plastique, il s'agit de PTFE ou de PEEK et, concernant le deuxième plastique (12), il s'agit de PP.

10. Dispositif selon au moins l'une des revendications 6 à 9,
**caractérisé**
**en ce que** des particules (14) électriquement conductrices sont incorporées dans le premier plastique (11) et/ou dans le troisième plastique.
